# EUROPÄISCHE PATENTSCHRIFT

(11) **EP 2 994 319 B1**
(45) Veröffentlichungstag und Bekanntmachung des Hinweises auf die Patenterteilung: **15.03.2017**
(21) Anmeldenummer: 14724998.1
(22) Anmeldetag: 12.04.2014
(51) Int. Cl.: B43K 29/00, G06F 3/044, G06F 3/0354

(54) **EINGABEGERÄT FÜR BERÜHRUNGSEMPFINDLICHE, KAPAZITIVE OBERFLÄCHEN**
INPUT DEVICE FOR TOUCH-SENSITIVE, CAPACITIVE SURFACES
APPAREIL D'ENTRÉE POUR DES SURFACES CAPACITIVES SENSIBLES AU CONTACT

(30) Priorität: 08.05.2013 DE 102013008232
(43) Veröffentlichungstag der Anmeldung: 16.03.2016
(73) Patentinhaber: STAEDTLER Mars GmbH & Co. KG, 90427 Nürnberg (DE)
(72) Erfinder: SCHWAB, Oliver, 90556 Cadolzburg (DE); WEISS, Peter, 90453 Nürnberg (DE); DIX, Rilke, 96047 Bamberg (DE); ADLER, Jürgen, 91096 Kleinseebach (DE); CASTNER, Arno, 90607 Rückersdorf (DE); BERGMANN, Max, 6971 Hard (AT); VYHNAL, Alexander, 90451 Nürnberg (DE)
(86) Internationale Anmeldenummer: PCT/EP2014/000983
(87) Internationale Veröffentlichungsnummer: WO 2014/180529

(56) Entgegenhaltungen:
- EP-A2- 0 283 250
- US-A1- 2008 266 267

## Beschreibung

Die Erfindung betrifft ein Eingabegerät für berührungsempfindliche, kapazitive Oberflächen, wobei das Gerät als ein mit einem Auftragsmedium gefülltes Schreib-, Zeichen- und/oder Malutensil oder als ein Kosmetikutensil vorliegt. Eingabegeräte für derartige Oberflächen/Displays sind prinzipiell bekannt.

So sind beispielsweise Eingabegriffel bekannt, welche aus einem elektrisch leitfähigen Schaft bestehen, wobei an einem Ende ein weicher, leitfähiger, elastisch ausgebildeter Kontaktstopfen für das Display bzw. die Oberfläche des Displays ausgebildet ist.
Nachteilig ist es bei derartigen Eingabestiften, dass sie als reiner Eingabestift zu teuer sind und zudem keine Schreib- und/oder Auftragsfunktion erfüllen.

Weiter gibt es Eingabestifte, welche an einem Ende ein Schreiborgan oder einen Applikator und an dem anderen Ende eine elektrisch leitfähige Anordnung in Form eines Kontaktstopfens aufweisen, welcher bei Berührung des kapazitiven Displays eine Eingabefunktion ermöglicht bzw. auslöst.
Die bekannten und oben aufgeführten Eingabestifte weisen jedoch eine Vielzahl von Nachteilen auf.
So sind derartige Stifte teuer in der Herstellung, da die Schäfte leitfähig ausgestaltet sind, was bis dato für konventionelle Auftragsgeräte nicht nötig war. Weiter sind nahezu alle diese Eingabestifte nach dem Stand der Technik als Kugelschreiber ausgebildet, wodurch der Benutzer in seiner Auswahl des Schreibmediums sehr eingeschränkt ist.

Aus der EP A 0 283 250 ist ein Eingabegerät gemäß dem Oberbegriff des Anspruchs 1 offenbart.

Aus der US 2008/0266267 A1 ist ein Eingabehalter bekannt, der im Wesentlichen aus einem reinen Styluselement besteht. Dieses Styluselement ist ein Universalhalter, der aufgrund seines leitfähigen Schaftes als Eingabeelement funktioniert, wobei an dieses Eingabeelement optional verschiedene Anzeige-, Auftragsgeräte und dergleichen angedockt werden können, aber mit der eigentlichen Funktion nichts zu tun haben.
Als nachteilig ist es bei dieser Lösung anzusehen, dass der Eingabehalter teuer in der Herstellung ist. Zudem sind die Anzeige und/oder Auftragsgeräte verlierbar am Eingabehalter angeordnet.

**Aufgabe** der Erfindung ist es daher, ein Eingabegerät für berührungsempfindliche kapazitive Oberflächen zu schaffen, welches die genannten Nachteile nicht aufweist, wobei das Eingabegerät neben der Eingabefunktion auch eine Auftragsfunktion aufweist.
Weiter ist es Aufgabe der Erfindung ohne einschneidende konstruktive Veränderungen an einem bereits bekannten Auftragsgerät eine kapazitive Eingabefunktion kostengünstig zu integrieren.

Unter Auftragsgeräten werden nachfolgend Schreib-, Zeichen- und/oder Malgeräte wie beispielsweise Faserschreibgeräte, Gel- oder Kugelschreiber verstanden.
Weiter kann unter einem Auftragsgerät ein Kosmetikutensil verstanden werden, welches beispielsweise als ein Mascara-Stift oder als ein flüssiger Eyeliner ausgebildet ist.

**Gelöst wird die Aufgabe** mit den Merkmalen des Hauptanspruchs.
Vorteilhafte Ausgestaltungen werden durch die Unteransprüche umfasst.

Das erfindungsgemäße Eingabegerät für berührungsempfindliche, kapazitive Oberflächen, besteht mindestens aus einem Auftragsgerät mit mindestens einem Auftragselement und mindestens einem Kontaktierungselement für berührungsempfindliche, kapazitive Displays. Das Auftragsgerät ist als ein mit einem flüssigen, gelartigen oder pastösen Auftragsmedium gefüllter Halter ausgebildet, wobei der Halter bzw. Schaft des Auftragsgerätes nicht leitfähig, zumindest jedoch im Griffbereich des Anwenders nicht leitfähig ausgebildet sein muss. Das Auftragsmedium hingegen ist elektrisch leitfähig ausgebildet, wobei zwischen dem mindestens einen Kontaktierungselement und dem flüssigen, gelartigen oder pastösen Auftragsmedium eine elektrisch leitfähige Verbindung ausgebildet ist.

Hierbei hat es sich als überraschend herausgestellt, dass der Halter des Eingabegerätes nicht leitfähig ausgebildet sein muss. Beispielhaft für nicht leitfähige Halter seinen Schäfte aus thermoplastischen Kunststoffen wie Polypropylen (PP) oder Polyethylen (PE) genannt.

Weiter hat es sich als überraschend herausgestellt, dass eine nicht feste Substanz bzw. Auftragsmedium, im vorliegenden Falle eine flüssige, gelartige oder pastöse Substanz, als ein Funktionselement des Eingabegerätes ausgebildet ist.

Das flüssige Auftragsmedium kann als freie Flüssigkeit oder als kapillar gebundene Flüssigkeit in einem Speichersystem im Halter vorliegen.
Das flüssige Auftragsmedium kann hierbei als Tinte, Lacksystem oder Tusche vorliegen. Hierbei ist es unerheblich, ob es sich um wässrige oder nichtwässrige Auftragsmedien handelt. Wichtig für die Funktion in einem Eingabegerät ist lediglich die elektrische Leitfähigkeit des entsprechenden Auftragsmediums.

Handelt es sich um ein gelartiges Auftragsmedium, so kann dieses Medium als eine thixotrope oder scherverdünnende Zusammensetzung vorliegen, wie diese aus klassischen Gelschreibern bekannt sind. Beispielhaft seinen klassische Gelrezepturen aber natürlich auch Gele mit Metallic-Effekt genannt, wie diese aus dem Stand der Technik bekannt sind.

Ist das Auftragsmedium pastös, so handelt es sich beispielsweise um Kugelschreiberpasten. Derartige Pasten erhalten ihre Leitfähigkeit durch Additive bzw. Leitfähigkeitsvermittler.

Unabhängig von der Ausprägung des Auftragsmediums ist der Sachverhalt, dass es zwingend erforderlich ist, dass zwischen dem Kontaktierungselement und leitfähigem Auftragsmedium eine elektrisch leitfähige Verbindung ausgebildet ist. Das Kontaktierungselement besteht in der Regel aus einem nachgiebigen Kontaktelement und einem Leitelement, wobei mindestens das Leitelement elektrisch leitfähig ausgebildet ist. Das Kontaktelement kann sowohl leitfähig als auch nicht leitfähig ausgebildet sein. Ist das Kontaktelement nicht leitfähig ausgebildet, beispielsweise eine dünne Gummischicht, so bildet sich ein kapazitives Element zwischen Oberfläche Tablet und Leitelement aus, was zu einer Ladungsverschiebung an der Oberfläche des Tablets führt.

Alternativ kann das Kontaktierungselement auch einstückig ausgebildet sein, wobei ein Ende des einstückigen Elements mit dem Auftragsmedium im Speicherelement in Kontakt gebracht wird, wodurch eine leitfähige Verbindung ausgebildet wird. In diesem Fall ist das Kontaktierungselement komplett leitfähig ausgebildet.

Das Kontaktierungselement kann hierbei an dem der Auftragsspitze stirnseitig gegenüberliegenden Ende des Gerätes und/oder an einer Abschlusskappe für das Auftragselement des Halters angeordnet sein.

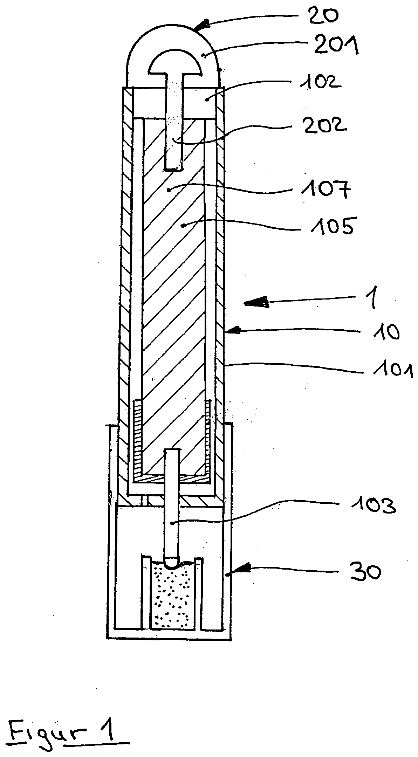

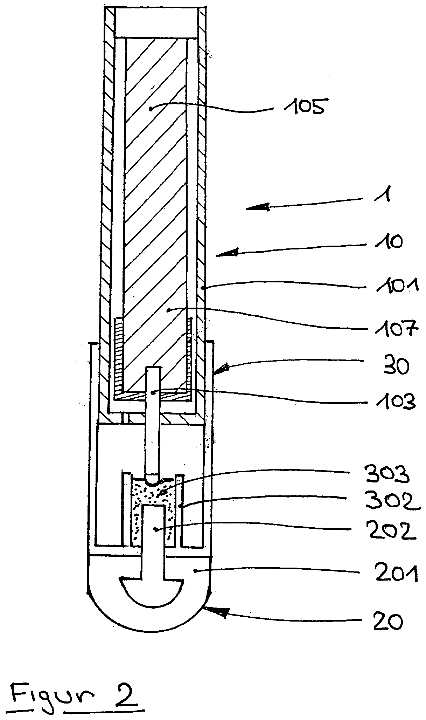

Zur besseren Darstellung der erfindungsgemäßen Lösung sind die nachfolgenden **Figuren 1** **und** **2** angeführt.

**Figur 1** zeigt eine erste mögliche Ausführungsform eines Eingabegerätes 1, bei der das Auftragsgerät 10 als ein Halter 101 mit Auftragselement 103, Speichersystem 107 und einem Endstopfen 102 vorliegt. Der Halter 101 bzw. das Auftragselement 103 ist mit einer abnehmbaren Abschlusskappe 30 verschlossen. Im bzw. am Endstopfen 102 ist ein Kontaktierungselement 20, bestehend aus einem elektrisch leitfähigen Leitelement 202 und einem elektrisch leitfähigen Kontaktelement 201 in Form eines dotierten Gummitipp integriert und/oder befestigt. Das elektrisch leitfähige Leitelement 202 durchdringt den Endstopfen 102 und ist in das Speichersystem 107 eingeschoben, in der Art, dass zwischen dem Leitelement 202 und dem mit elektrisch leitfähigem Auftragsmedium 105 getränkten Speichersystem 107 eine elektrisch leitfähige Verbindung ausgebildet ist. Am pilzförmig ausgebildeten Leitelement 202 ist hinterschnittig ein elastisch und leitfähig ausgebildetes Kontaktelement 201 gehalten. Damit ist zwischen dem leitfähigen Kontaktelement 201 und Speichersystem 107 eine durchgehend leitfähige Verbindung ausgebildet.
Das Material des Halters bzw. Schaftes, die in der Regel den Griffbereich beinhalten, sind elektrisch nicht leitend ausgebildet.

Im Falle der nicht dargestellten Benutzungs- bzw. Eingabeaktion auf einem Tablet, Touchscreen oder kapazitiven Display kontaktiert das Kontaktelement 201 die Oberfläche des Tablets und stellt damit eine leitende Verbindung mit dem mit Tinte getränkten Speichersystem her.
In überraschender Weise hat sich nunmehr gezeigt, dass die Funktion "Eingabe" auch dann funktioniert, wenn der Halter/Schaft als ein elektrischer Isolator vorliegt. In diesem Fall bildet sich ein kapazitives Element zwischen den Fingern des Benutzers und Speichersystem aus, wodurch am Tablet eine Ladungsverschiebung stattfindet und damit eine Eingabe erfolgreich getätigt wird.

In einer nicht dargestellten Variante ist im Inneren des Halters (101) kein Speichersystem (107) angeordnet, sondern das Auftragsmedium (105) liegt als eine freie Flüssigkeit in Form von Tinte, Tusche oder Lack vor.

In der **Figur 2** ist eine zweite mögliche Ausführungsform eines Eingabegerätes 1, bei der das Auftragsgerät 10 als ein Halter 101 mit Auftragselement 103, Speichersystem 107 und einem Endstopfen 102 vorliegt. Der Halter 101 bzw. das Auftragselement 103 ist mit einer abnehmbaren Abschlusskappe 30 verschlossen. An der Abschlusskappe 30 ist ein Kontaktierungselement 20 integriert und/oder befestigt. Das Kontaktierungselement besteht aus einem leitfähigen Kontaktelement 201 und einem elektrisch leitfähigen Leitelement 202. Das metallisch oder als dotierter Kunststoff ausgebildete Leitelement 202 durchdringt die Stirnseite der Abschlusskappe 30 und taucht in ein Feuchthalteelement 303 ein, welches in der Innenkappe 302 gehaltert ist.
Das Feuchthalteelement/Anschreibhilfe 303 ist in der Regel mit dem Auftragsmedium 105, wie es auch im Halter 101 bzw. Speichersystem 107 gespeichert ist, getränkt und damit ebenfalls leitfähig. Das Feuchthalteelement 303 wiederum steht mit dem Speichersystem 107 über das Auftragselement 103 in einer leitfähigen Verbindung. Damit besteht zwischen dem Leitelement 202 und dem mit elektrisch leitfähigem Auftragsmedium 105 getränkten Speichersystem 107 eine elektrisch leitfähige Verbindung.
Am pilzförmig ausgebildeten Leitelement 202 ist hinterschnittig ein elastisch und leitfähig ausgebildetes Kontaktelement 201 gehalten.

Das Kontaktierungselement kann natürlich auch einstückig ausgebildet sein, d.h. Kontaktelement und Leitelement sind aus einem leitfähigen Material.

Wie in den Figuren 1 und 2 beschrieben, muss das Auftragsmedium leitfähig ausgebildet sein. Leitfähigkeit eines Stoffes oder Stoffgemisches hängt von der Verfügbarkeit beweglicher Ladungsträger ab. Beweglich Ladungsträger in Flüssigkeiten sind beispielweise Ionen.
Nachfolgend sind beispielhaft einige **Rezepturbeispiele** genannt, welche das Kriterium der Leitfähigkeit erfüllen.

**Rezepturbeispiel 1: gelbe Textmarkertinte gemäß DE 43 20 959 C2, Beispiel 8.1**

| | |
|---|---|
| Wasser | 470 g |
| Lanolin Sulfosuccinat | 20 g |
| Benzisothiazolinon | 2 g |
| Pentaglycerin | 100- 150 g |
| Basic Yellow 40 (500%) | 6,5 g |
| Solvent Yellow 43 | 0,5 g |
| Kunststoffdispersion (40-42%) | 420 g |

| | |
|---|---|
| + weitere Schritte zur Herstellung siehe DE 43 20 959 C2 | |

In der DE 43 20 959 C2 sind eine Vielzahl von Beispieltinten, welche ebenfalls die Kriterien der Leitfähigkeit erfüllen und im erfindungsgemäßen Eingabegerät eingesetzt werden können.

**Rezepturbeispiel 2: schwarze permanente Tinte**

| | |
|---|---|
| n-Propanol | 89,3 Gew. % |
| Wasser | 0,3 Gew. % |
| Bindemittel | 3,5 Gew. % |
| 3-Methylbenzoesäure | 0,2 Gew. % |
| Paraffinwachs | 0,2 Gew. % |
| Solvent Blue 129 | 5,5 Gew. % |
| Solvent Violet 9 | 1,0 Gew. % |

Rezepturbeispiel 2 ist aus der DE 196 26 842 A1 bekannt. Als weitere Tinten sei auf die Rezepturbeispiele 1.1 bis 2.0 in dieser Schrift verwiesen, welche aufgrund Ihrer Zusammensetzung ebenfalls leitfähig sind.

**Rezepturbeispiel 3: rote Tinte für Fasermaler**

| | |
|---|---|
| Wasser | 61,8 Gew. % |
| Konservierungsmittel | 0,2 Gew.-% |
| Bienenwachs | 0,3 Gew. % |
| Triethanolamin | 0,3 Gew.-% |
| Emulgator | 1,4 Gew.-% |
| Gummi Arabicum | 0,1 Gew. % |
| Diethylenglycol | 32,1 Gew,-% |
| Farbstoffe | 3,8 Gew.-% |

Rezepturbeispiel 3 ist aus der DE 297 14 594 U1 bekannt. Als weitere Tinten sei auf die Rezepturbeispiele 1 bis 9 in dieser Schrift verwiesen, welche aufgrund Ihrer Zusammensetzung ebenfalls leitfähig sind.

Vorteile dieser in den Figuren 1 und 2 beispielhaft beschrieben Lösungen liegen darin, dass handelsübliche Schreibgeräte bei der Modifikation zum Stylus im Grundaufbau nur marginale - wenn überhaupt - Veränderungen nötig sind, die nicht in die Abgabe des Schreibmediums eingreifen. Veränderungen betreffen in der Regel nur die Endstopfen und die Abschlusskappen, welche mit einem Kontaktierungselement ausgestattet werden.

### Positionsliste

- 1: Eingabegerät
10 Auftragsgerät
101 Halter
102 Endstopfen
103 Auftragselement
105 Auftragsmedium
107 Speichersystem
20 Kontaktierungselement
201 Kontaktelement
202 Leitelement
30 Abschlusskappe
302 Innenkappe
303 Feuchthalteelement

## Patentansprüche

1. **Eingabegerät** für berührungsempfindliche, kapazitive Oberflächen, mindestens bestehend aus einem Auftragsgerät mit mindestens einem Auftragselement und mindestens einem Kontaktierungselement,
wobei das Auftragsgerät als ein mit einem flüssigen, gelartigen oder pastösen Auftragsmedium gefüllter Halter ausgebildet ist,
wobei der Halter des Auftragsgerätes zumindest im Griffbereich nicht leitfähig ausgebildet ist,
**dadurch gekennzeichnet**
**dass** das Auftragsmedium elektrisch leitfähig ausgebildet ist
und **dass** zwischen dem mindestens einen Kontaktierungselement und dem flüssigen, gelartigen oder pastösen Auftragsmedium eine elektrisch leitfähige Verbindung ausgebildet ist.

2. Eingabegerät nach Anspruch 1,
**dadurch gekennzeichnet,**
**dass** das flüssige Auftragsmedium im Halter als freie Flüssigkeit vorliegt.

3. Eingabegerät nach Anspruch 1,
**dadurch gekennzeichnet,**
**dass** das flüssige Auftragsmedium in einem Speichersystem als kapillar gebundene Flüssigkeit vorliegt.

4. Eingabegerät nach Anspruch 1,
**dadurch gekennzeichnet,**
**dass** das gelartige Auftragsmedium als thixotrope Zusammensetzung vorliegt.

5. Eingabegerät nach Anspruch 1,
**dadurch gekennzeichnet,**
**dass** das pastenartige Auftragsmedium als Kugelschreiberpaste vorliegt.

6. Eingabegerät nach Anspruch 1,
**dadurch gekennzeichnet,**
**dass** das Kontaktierungselement ein Kontaktelement und ein Leitelement aufweist.

7. Eingabegerät nach Anspruch 1,
**dadurch gekennzeichnet,**
**dass** das Kontaktierungselement an dem der Auftragsspitze stirnseitig gegenüberliegendem Ende angeordnet ist
und/oder dass das Kontaktierungselement an einer Abschlusskappe für das Auftragselement des Halters angeordnet ist.

8. Eingabegerät nach Anspruch 7,
**dadurch gekennzeichnet,**
**dass** das Kontaktierungselement als ein elektrisch leitfähiges Material ausgebildet ist.

9. Eingabegerät nach Anspruch 6,
**dadurch gekennzeichnet,**
**dass** das Leitelement als ein elektrisch leitfähiges Material ausgebildet ist.

## Claims

1. Input device for touch-sensitive capacitive surfaces, consisting at least of an application device with at least one application element and at least one contacting element,
wherein the application device is constructed as a holder filled with a liquid, gel-like or highly viscous coating medium and
wherein the holder of the application device is constructed to be non-conductive at least in the grip region,
**characterised in that**
the coating medium is formed to be electrically conductive and
an electrically conductive connection is formed between the at least one contacting element and the liquid, gel-like or highly viscous coating medium.

2. Input device according to claim 1, **characterised in** the liquid coating medium is present in the holder as a free liquid.

3. Input device according to claim 1, **characterised in that** the liquid coating medium is present in a storage system as a capillary-bound liquid.

4. Input device according to claim 1, **characterised in that** the gel-like coating medium is present as a thixotropic composition.

5. Input device according to claim 1, **characterised in that** the highly viscous coating medium is present as ballpoint pen mass.

6. Input device according to claim 1, **characterised in that** the contacting element comprises a contact element and a conducting element.

7. Input device according to claim 1, **characterised in that** the contacting element is arranged at the end-face end opposite the application tip and/or that the contacting element is arranged at a closure cap for the application element of the holder.

8. Input device according to claim 7, **characterised in that** the contacting element is constructed as an electrically conductive material.

9. Input device according to claim 6, **characterised in that** the conducting element is constructed as an electrically conductive material.

## Revendications

1. Instrument de saisie pour surfaces capacitives réagissant au contact, constitué d'au moins un instrument applicateur composé d'au moins un élément applicateur et d'au moins un élément établissant un contact,
ledit instrument applicateur étant réalisé sous la forme d'un support empli d'un agent liquide, gélatineux ou pâteux devant être déposé,
la réalisation dudit support de l'instrument applicateur étant électriquement non conductrice, au moins dans la zone de préhension,
**caractérisé par le fait**
**que** l'agent à déposer est de réalisation électriquement conductrice ;
et par le fait qu'une jonction électriquement conductrice est instaurée entre l'élément établissant un contact, à présence minimale, et l'agent liquide, gélatineux ou pâteux devant être déposé.

2. Instrument de saisie selon la revendication 1,
**caractérisé par le fait**
**que** l'agent liquide à déposer se présente, dans le support, sous la forme d'un liquide libre.

3. Instrument de saisie selon la revendication 1,
**caractérisé par le fait**
**que** l'agent liquide à déposer se présente, dans un système d'accumulation, sous la forme d'un liquide à liaison capillaire.

4. Instrument de saisie selon la revendication 1,
**caractérisé par le fait**
**que** l'agent gélatineux à déposer se présente sous la forme d'un composé thixotrope.

5. Instrument de saisie selon la revendication 1,
**caractérisé par le fait**
**que** l'agent pâteux à déposer se présente sous la forme d'une pâte pour stylos à bille.

6. Instrument de saisie selon la revendication 1,
**caractérisé par le fait**
**que** l'élément établissant un contact comprend un élément de contact et un élément de conduction.

7. Instrument de saisie selon la revendication 1,
**caractérisé par le fait**
**que** l'élément établissant un contact est disposé à l'extrémité frontalement opposée à la pointe applicatrice ;
et/ou par le fait que ledit élément, établissant un contact, est implanté sur un capuchon obturateur affecté à l'élément applicateur du support.

8. Instrument de saisie selon la revendication 7,
**caractérisé par le fait**
**que** l'élément établissant un contact est réalisé en un matériau électriquement conducteur.

9. Instrument de saisie selon la revendication 6,
**caractérisé par le fait**
**que** l'élément de conduction est réalisé en un matériau électriquement conducteur.
